# FASCICULE DE BREVET EUROPEEN

(11) **EP 1 586 502 B1**
(45) Date de publication et mention de la délivrance du brevet: **01.08.2007**
(21) Numéro de dépôt: 05290586.6
(22) Date de dépôt: 17.03.2005
(51) Int. Cl.: B64C 25/48

(54) **Procédé et dispositif pour la conduite et le freinage d'un aéronef roulant sur le sol.**
Verfahren und Vorrichtung zur Lenkung und Bremsung eines rollenden Flugzeuges
Process and device for steering and braking a taxiing aircraft

(30) Priorité: 16.04.2004 FR 0403974
(43) Date de publication de la demande: 19.10.2005
(73) Titulaire: AIRBUS France, 31060 Toulouse (FR)
(72) Inventeur: Bellouard, Rémi, 31850 Montrabe (FR); Mathieu, Gérard, 31820 Pibrac (FR)
(74) Mandataire: Bonnetat, Christian

(56) Documents cités:
- FR-A- 1 086 855
- FR-A- 2 757 821
- US-A- 4 006 941

## Description

La présente invention a pour objet un procédé et un dispositif pour la conduite et le freinage d'un aéronef roulant sur le sol, ainsi qu'un aéronef équipé d'un tel dispositif.

On sait que le freinage au sol des aéronefs est assuré par des freins installés sur les roues des trains d'atterrissage, ainsi que par des volets déporteurs (aérofreins) capables d'augmenter la traînée de l'aéronef et de plaquer celui-ci au sol pour augmenter l'efficacité des freins des roues et/ou des inverseurs de poussée, les freins de roues étant commandés par un système capable de prendre en compte des ordres venant du pilote ou d'un dispositif automatique.

On sait de plus que la conduite de l'aéronef au sol, c'est-à-dire le contrôle en lacet dudit aéronef, est principalement assuré par la gouverne de direction et le train avant, disposé près du nez de ce dernier (communément appelé "roulette de nez"), mais également par un freinage différentiel entre les ensembles de roues disposés de part et d'autre de l'axe longitudinal de l'avion.

Pour freiner l'avion au sol, le pilote dispose de deux pédales montées sur le palonnier et associées respectivement aux freins des roues disposées de part et d'autre dudit axe longitudinal : ainsi, la pédale de droite peut commander les freins disposés à droite de l'aéronef et la pédale de gauche peut commander les freins disposés à gauche de celui-ci.

On remarquera qu'un tel dispositif présente l'inconvénient que le niveau de freinage différentiel et le niveau de décélération sont étroitement liés et dépendent uniquement de la position desdites pédales.

Par ailleurs, on connaît des aéronefs, généralement de grande taille, comportant au moins deux paires de trains de roues, telles que les deux trains de roues de chaque paire sont symétriques l'un de l'autre par rapport au plan vertical longitudinal médian d'un tel aéronef et que les deux trains de roues (désignés ci-après par trains de roues rapprochés) de l'une desdites paires sont plus proches dudit plan vertical longitudinal médian que les deux trains de roues (désignés ci-après par trains de roues écartés) de l'autre desdites paires, chaque roue d'un train de roues étant équipée d'un frein individuel. Un tel appareil est décrit dans le document US 4,006,941.

L'objet de la présente invention est de remédier, pour un tel aéronef, à l'inconvénient rappelé ci-dessus en permettant de modifier la relation freinage différentiel - décélération en jouant sur la répartition de freinage entre les différents trains de roues en fonction de différents paramètres, afin d'adapter au mieux la décélération et la conduite de l'aéronef à la situation rencontrée par le pilote, et donc d'améliorer la sécurité dudit aéronef.

A cette fin, selon l'invention, le procédé pour la conduite et le freinage d'un aéronef roulant sur le sol et comportant au moins deux paires de trains de roues telles que rappelé ci-dessus, ainsi que deux organes de commande de freinage, à la disposition du pilote de l'aéronef, chacun desdits organes étant associé à deux trains de roues disposés d'un même côté dudit plan vertical longitudinal médian et engendrant un ordre de freinage apte à commander les freins des deux trains de roues associés, est remarquable en ce que :
- on compare lesdits ordres de freinage ;
- l'ordre de freinage le plus petit n'est appliqué que sur les freins du train de roues écarté auquel est associé l'organe de commande de freinage engendrant cet ordre de freinage le plus petit ; et
- l'ordre de freinage le plus grand est appliqué non seulement sur les freins des deux trains de roues auxquels est associé l'organe de commande de freinage engendrant cet ordre de freinage le plus grand, mais également sur les freins du train de roues rapproché associé à l'organe de commande de freinage engendrant ledit plus petit ordre de freinage.

Ainsi, selon l'invention, on augmente beaucoup la capacité de freinage de l'aéronef puisque l'on peut freiner trois trains à l'aide de l'ordre de freinage le plus grand, au lieu de deux. On remarquera que, puisque le troisième train freiné selon l'invention est un train rapproché (ne présentant donc qu'un faible bras de levier), il n'en résulte que peu d'effet sur le moment de freinage en lacet de l'aéronef.

Cependant, lorsque le pilote exerce une forte action différentielle sur les organes de commande de freinage pour obtenir une commande en lacet importante et lorsque la vitesse de l'aéronef est élevée, il est important de fournir au pilote le maximum d'efficacité en lacet, afin de pouvoir corriger la trajectoire de l'aéronef le plus rapidement possible et éviter une sortie de piste latérale.

A cet effet, dans un mode de mise en oeuvre préféré du procédé conforme à la présente invention :
- on compare la vitesse de roulement de l'aéronef à un premier seuil ;
- on compare la valeur absolue de la différence desdits ordres de freinage à un deuxième seuil ;
- lorsque la vitesse de roulement de l'aéronef est inférieure audit premier seuil, indépendamment de la position de ladite valeur absolue par rapport audit deuxième seuil, ou lorsque ladite valeur absolue est inférieure audit deuxième seuil, indépendamment de la position de ladite vitesse de roulement par rapport audit premier seuil, l'ordre de freinage le plus petit n'est appliqué que sur les freins du train de roues écarté auquel est associé l'organe de commande de freinage engendrant cet ordre de freinage le plus petit, alors que l'ordre de freinage le plus grand est appliqué non seulement sur les freins des deux trains de roues auquel est associé l'organe de commande de freinage engendrant cet ordre de freinage le plus grand, mais également sur les freins du train de roues rapproché associé à l'organe de commande de freinage engendrant le plus petit ordre de freinage ; et
- lorsque, simultanément, la vitesse de roulement de l'aéronef est supérieure audit premier seuil et ladite valeur absolue est supérieure audit deuxième seuil, chacun desdits ordres de freinage commande les freins des deux trains de roues associés à l'organe de commande de freinage correspondant.

De préférence, lorsque la vitesse de roulement de l'aéronef ou ladite valeur absolue de la différence des ordres de freinage passent de part et d'autre du seuil correspondant, le changement de mode de freinage s'effectue progressivement.

Par ailleurs, un dispositif conforme à la présente invention pour la conduite et le freinage d'un aéronef roulant sur le sol et pourvu de trains de roues et d'organes de commande en freinage tels que rappelé ci-dessus, est remarquable en ce qu'il comporte des moyens de répartition de freinage recevant les deux ordres de freinage et pourvus de moyens aptes à comparer ces derniers et en ce que lesdits moyens de répartition de freinage n'appliquent l'ordre de freinage le plus petit que sur les freins du train de roues écarté auquel est associé l'organe de commande de freinage engendrant cet ordre de freinage le plus petit, et appliquant l'ordre de freinage le plus grand non seulement sur les freins des deux trains de roues auxquels est associé l'organe de commande de freinage engendrant cet ordre de freinage le plus grand, mais également sur les freins du train de roues rapproché associé à l'organe de commande de freinage engendrant ledit plus petit ordre de freinage.

Dans un tel dispositif, il est avantageux que :
- lesdits moyens de répartition de freinage comportent des moyens de calcul aptes à comparer la vitesse de roulement de l'aéronef à un premier seuil ;
- lesdits moyens de comparaison adressent auxdits moyens de calcul la différence entre lesdits ordres de freinage et lesdits moyens de calcul comparent la valeur absolue de cette différence à un deuxième seuil ;
- lorsque la vitesse de roulement de l'aéronef est inférieure audit premier seuil, indépendamment de la position de ladite valeur absolue par rapport audit deuxième seuil, ou lorsque ladite valeur absolue est inférieure audit deuxième seuil, indépendamment de la position de ladite vitesse de roulement par rapport audit premier seuil, lesdits moyens de répartition de freinage n'appliquent l'ordre de freinage le plus petit que sur les freins du train de roues écarté auquel est associé l'organe de commande de freinage engendrant cet ordre de freinage le plus petit, alors que lesdits moyens de répartition de freinage appliquent l'ordre de freinage le plus grand non seulement sur les freins des deux trains de roues auquel est associé l'organe de commande de freinage engendrant cet ordre de freinage le plus grand, mais également sur les freins du train de roues rapproché associé à l'organe de commande de freinage engendrant le plus petit ordre de freinage ; et
- lorsque, simultanément, la vitesse de roulement de l'aéronef est supérieure audit premier seuil et ladite valeur absolue est supérieure audit deuxième seuil, lesdits moyens de répartition de freinage appliquent chacun desdits ordres de freinage sur les freins des deux trains de roues associés à l'organe de commande de freinage correspondant.

Avantageusement, lesdits moyens de répartition de freinage comportent :
- deux liaisons directes reliant respectivement lesdits organes de commande de freinage aux freins des roues des trains écartés ;
- deux premiers éléments à conduction commandée, aptes à relier respectivement lesdits organes de commande de freinage aux freins des roues des trains rapprochés, les états passant et non passant desdits premiers éléments étant synchrones et commandés par lesdits moyens de calcul ; et
- deux seconds éléments à conduction commandée aptes à relier respectivement une sortie des moyens de comparaison sur laquelle apparaît le plus grand desdits ordres de freinage aux freins des roues des trains rapprochés, les états passant et non passant desdits seconds éléments étant synchrones, mais opposés à ceux desdits premiers éléments, et commandés par lesdits moyens de calcul.

Afin que le fonctionnement du dispositif conforme à la présente invention ne comporte aucune variation abrupte, le passage desdits premiers et seconds éléments à conduction commandée d'un de leurs états à l'autre est progressif.

A cette fin, lesdits premiers et seconds éléments à conduction commandée peuvent être des amplificateurs à gain commandé variable et des additionneurs peuvent être respectivement interposés entre les premier et second éléments à conduction commandée et les freins des roues d'un même train rapproché.

Bien entendu, la présente invention concerne également un aéronef comportant un dispositif de conduite et de freinage tel que décrit ci-dessus.

Les figures du dessin annexé feront bien comprendre comment l'invention peut être réalisée. Sur ces figures, des références identiques désignent des éléments semblables.

La figure 1 est une vue de face d'un avion civil gros porteur auquel peut s'appliquer la présente invention.

La figure 2 est une vue de dessus partielle de l'avion civil de la figure 1, seul le contour dudit avion étant représenté pour laisser apparaître l'emplacement des divers trains de roues.

La figure 3 donne le schéma synoptique d'un exemple de réalisation du dispositif de freinage conforme à la présente invention.

Les figures 4 et 5 sont des diagrammes illustrant schématiquement et partiellement le fonctionnement de l'exemple de réalisation de la figure 3.

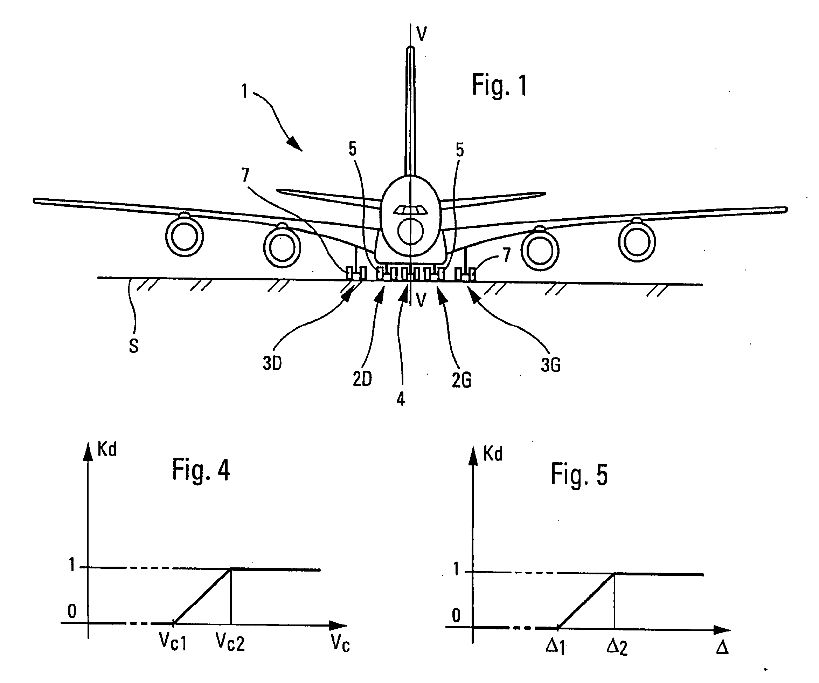

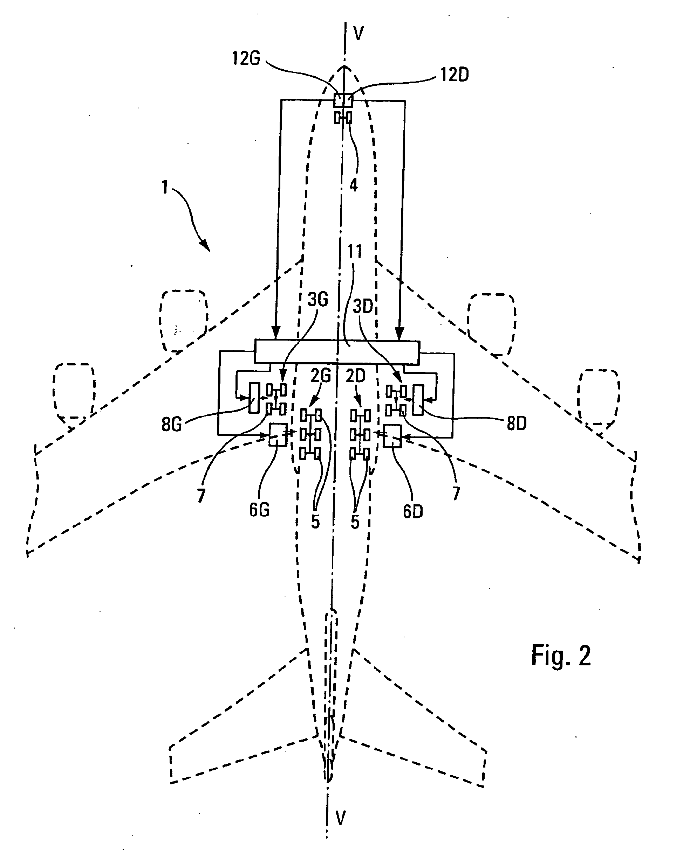

L'avion 1, montré schématiquement sur les figures 1 et 2 et roulant sur le sol S, comporte deux paires de trains de roues 2G, 2D et 3G, 3D, respectivement, ainsi qu'un train avant 4, disposé près du nez de l'avion 1 (communément appelé "roulette de nez").

Les deux trains de roues 2G et 2D, disposés respectivement à gauche et à droite de l'avion 1, sont symétriques l'un de l'autre par rapport au plan vertical longitudinal médian V-V de l'avion 1. De même, les deux trains de roues 3G et 3D, également disposés respectivement à gauche et à droite de l'avion 1, sont symétriques l'un de l'autre par rapport audit plan V-V. En revanche, les deux trains de roues 2G et 2D sont plus proches dudit plan V-V (et donc l'un de l'autre) que les trains de roues 3G et 3D.

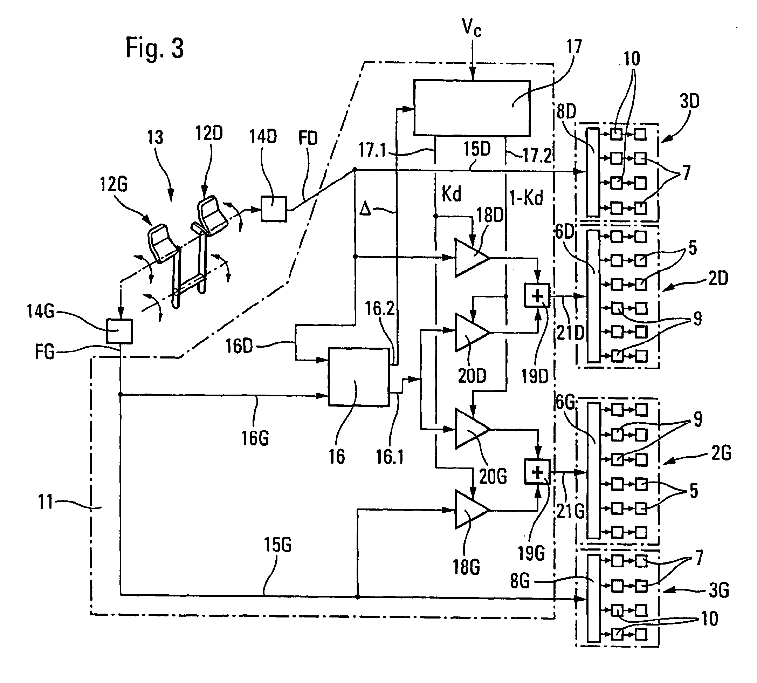

Chaque roue 5 des trains rapprochés 2G et 2D est équipée d'un frein individuel (schématisé sous la référence 9 sur la figure 3) et les freins individuels de chacun des trains 2G ou 2D sont commandés par un dispositif de commande 6G ou 6D, respectivement.

De même, chaque roue 7 des trains écartés 3G ou 3D est équipée d'un frein individuel (schématisé sous la référence 10 sur la figure 3) et les freins individuels de chacun des trains 3G ou 3D sont commandés par un dispositif de commande 8G ou 8D, respectivement.

Les dispositifs de commande 6G, 6D, 8G et 8D sont eux-mêmes commandés par un dispositif de répartition de freinage 11, recevant des ordres de freinage gauche FG et droit FD de deux organes gauche 1 2G et droit 12D, à la disposition du pilote.

Comme on le verra ci-après, l'ordre de freinage gauche FG est tout spécialement utilisé pour freiner les roues 7 du train gauche écarté 3G et peut être utilisé pour freiner les roues 5 du train gauche rapproché 2G et les roues 5 du train droit rapproché 2D. De même, l'ordre de freinage droit FD est tout spécialement utilisé pour freiner les roues 7 du train droit écarté 3D et peut être utilisé pour freiner les roues 5 du train droit rapproché 2D et les roues 5 du train gauche rapproché 2G.

D'autres organes de freinage (non représentés) sont de préférence mis à la disposition d'un copilote de l'avion 1.

Comme le montre schématiquement la figure 3, lesdits organes de freinage 12G et 12D peuvent être constitués par des pédales rotatives, articulées respectivement aux extrémités libres des leviers du palonnier 13 de l'avion 1.

Lorsque le pilote, avec son pied gauche (ou droit) fait tourner la pédale gauche 12G (ou droite 12D), la rotation de ladite pédale est détectée par un transducteur gauche 14G (ou par un transducteur droit 14D), qui engendre l'ordre de freinage gauche FG (ou droit FD) correspondant, adressé audit dispositif de répartition de freinage 11.

Dans l'exemple de réalisation illustré schématiquement par la figure 3, le dispositif de répartition de freinage 11 comporte :
- une liaison directe 15D entre le transducteur 14D et le dispositif de commande 8D permettant d'appliquer l'ordre de freinage FD à ce dernier ;
- une liaison directe 15G entre le transducteur 14G et le dispositif de commande 8G permettant d'appliquer l'ordre de freinage FG à ce dernier ;
- un dispositif de comparaison 16, recevant les ordres de freinage FD et FG respectivement sur ses entrées 1 6D et 1 6G et pourvu de deux sorties 16.1 et 16.2 sur lesquelles apparaissent respectivement le plus grand desdits ordres FD et FG et la valeur absolue Δ de la différence entre ces deux ordres FD et FG ;
- un calculateur 17 recevant, du dispositif de comparaison 16, ladite valeur absolue Δ et, d'un capteur (non représenté) monté à bord de l'avion 1, la mesure de la vitesse de roulement Vc de ce dernier sur le sol S, ledit calculateur 17 calculant de la façon décrite ci-après, à partir de Δ et de Vc, des valeurs Kd et 1-Kd, disponibles respectivement à ses sorties 17.1 et 17.2 ;
- un amplificateur à gain variable 18D, dont l'entrée reçoit l'ordre FD et dont la sortie est reliée à un additionneur 19D, l'entrée de commande du gain dudit amplificateur 18D étant reliée à la sortie 17.1 du calculateur 17, pour recevoir la valeur Kd à titre de gain ;
- un amplificateur à gain variable 18G, dont l'entrée reçoit l'ordre FG et dont la sortie est reliée à un additionneur 19G, l'entrée de commande du gain dudit amplificateur 18G étant reliée à la sortie 17.1 du calculateur 17, pour recevoir la valeur Kd à titre de gain ;
- un amplificateur à gain variable 20D, dont l'entrée est reliée à la sortie 16.1 du dispositif de comparaison 16 et dont la sortie est reliée à l'additionneur 19D, l'entrée de commande du gain dudit amplificateur 20D étant reliée à la sortie 17.2 du calculateur 17, pour recevoir la valeur 1-Kd à titre de gain ;
- un amplificateur à gain variable 20G, dont l'entrée est reliée à la sortie 16.1 du dispositif de comparaison 16 et dont la sortie est reliée à l'additionneur 19G, l'entrée de commande du gain dudit amplificateur 20G étant reliée à la sortie 17.2 du calculateur 17, pour recevoir la valeur 1-Kd à titre de gain ;
- une liaison 21 D entre la sortie de l'additionneur 19D et le dispositif de commande 6D ; et
- une liaison 21 G entre la sortie de l'additionneur 19G et le dispositif de commande 6G.

Comme cela est illustré schématiquement et partiellement par les figures 4 et 5, le calculateur 17 peut calculer le gain Kd de la façon suivante :
- si la vitesse de roulement Vc est inférieure ou égale à une valeur Vc1 (par exemple égale à 40 noeuds), Kd est égal à zéro (et donc 1-Kd est égal à 1), quelle que soit la valeur de Δ ;
- si la valeur absolue Δ de la différence entre les ordres de freinage FD et FG est inférieure ou égale à une valeur Δ1 (par exemple égale à 70% de la valeur maximale de Δ obtenue lorsque l'une des pédales 12G ou 12D est enfoncée au maximum alors que l'autre pédale 12D ou 12G ne subit aucune rotation par l'action du pilote), Kd est égal à zéro (et donc 1-Kd est égal à 1), quelle que soit la valeur de Vc ;
- si la vitesse de roulement Vc est supérieure ou égale à une valeur Vc2 supérieure à Vc1 (par exemple égale à 60 noeuds) et si la valeur absolue Δ est supérieure ou égale à une valeur Δ2 (par exemple égale à 80% de ladite valeur maximale de Δ), Kd est égal à 1 (et donc 1-Kd est égal à zéro) ;
- si la vitesse de roulement Vc est supérieure ou égale à Vc1, mais inférieure ou égale à Vc2 et si Δ est supérieure ou égale à Δ2, Kd est égal à Vc-Vc1 / Vc2-Vc1 (et donc 1-Kd est égal à Vc2-Vc / Vc2-Vc1) ;
- si la vitesse de roulement Vc est supérieure ou égale à Vc2 et si Δ est supérieure ou égale à Δ1 mais inférieure ou égale à Δ2, Kd est égal à Δ-Δ1 / Δ2-Δ1 (et donc 1-Kd est égal à Δ2-Δ / Δ2-Δ1) ;
- si la vitesse de roulement Vc est supérieure ou égale à Vc1 et inférieure ou égale à Vc2 et si Δ est supérieure ou égale à Δ1 et inférieure ou égale à Δ2 :
   ■ Kd est égal à Δ-Δ1 / Δ2-Δ1 et 1-Kd est égal à Δ2-Δ / Δ2-Δ1 si Δ-Δ1 /Δ2-Δ1 est inférieure ou égale à Vc-Vc1 / Vc2-Vc1 ;
   ■ Kd est égal à (Vc-Vc1) / (Vc2-Vc1) et 1-Kd est égal à Vc2-Vc /Vc2-Vc1 si Δ-Δ1 / Δ2-Δ1 est supérieure ou égale à Vc-Vc1 / Vc2-Vc1.

Ainsi, les gains Kd et 1-Kd peuvent prendre soit la valeur 0, soit la valeur 1 et passer de façon continue de l'une à l'autre en prenant des valeurs intermédiaires.

Par ailleurs, on voit que, en fonction du paramètre constitué par la vitesse de roulement Vc et du paramètre constitué par la valeur absolue Δ de la différence des ordres de freinage FD et FG commandés par le pilote, le fonctionnement du dispositif de répartition de freinage 1 1 peut se diviser en trois domaines, à savoir :
- un premier domaine constitué lui-même de trois zones dans lesquelles les conditions suivantes sont respectivement satisfaites :
   ■ première zone : la vitesse Vc est faible, inférieure à Vc1, et la différence Δ est également faible, inférieure à Δ1 ;
   ■ deuxième zone : la vitesse Vc est élevée, supérieure à Vc1, mais la différence Δ est faible, inférieure à Δ1 ; et
   ■ troisième zone : la vitesse Vc est faible, inférieure à Vc1, mais la différence Δ est élevée, supérieure à Δ1 ;
   dans les trois zones de ce premier domaine, c'est-à-dire dans la totalité de celui-ci, le calculateur 17 délivre un gain Kd nul, de sorte que les amplificateurs 18D et 18G sont inactifs, alors que le gain 1-Kd est égal à 1, de sorte que les amplificateurs 20D et 20G sont actifs. Par suite :
   * l'ordre de freinage FD est adressé au dispositif de commande 8D par la liaison 15D et les roues 7 du train écarté 3D sont freinées en conséquence;
   * l'ordre de freinage FG est adressé au dispositif de commande 8G par la liaison 15G et les roues 7 du train écarté 3G sont freinées en conséquence;
   * le plus grand des ordres de freinage FD et FG, apparaissant à la sortie 16.1 du dispositif de comparaison 16 est adressé, à la fois, aux dispositifs de commande 6D et 6G, respectivement à travers l'amplificateur 20D, l'additionneur 19D et la liaison 21 D et à travers l'amplificateur 20G, l'additionneur 19G et la liaison 21 G, de sorte que les roues 5 des trains rapprochés 2D et 2G sont également freinées ;
   dans ce premier domaine de fonctionnement, il est remarquable de noter que les roues 5 de l'un des trains rapprochés droit 2D ou gauche 2G sont freinées par l'ordre de freinage FG ou FD associé au côté opposé ;
- un deuxième domaine dans lequel la vitesse Vc est grande (supérieure à Vc2) et la différence Δ est également grande (supérieure à Δ2), ce qui signifie que le pilote exerce un freinage différentiel élevé à vitesse élevée pour obtenir une action en lacet importante ; dans ce deuxième domaine, le gain Kd est égal à 1, de sorte que les amplificateurs 18D et 18G sont actifs, alors que le gain 1-Kd est nul, de sorte que les amplificateurs 20D et 20G sont inactifs. Par suite :
   * l'ordre de freinage FD est adressé au dispositif de commande 8D par la liaison 15D et les roues 7 du train écarté 3D sont freinées en conséquence;
   * l'ordre de freinage FG est adressé au dispositif de commande 8G par la liaison 15G et les roues 7 du train écarté 3G sont freinées en conséquence;
   * l'ordre de freinage FD est adressé au dispositif de commande 6D à travers l'amplificateur 18D et l'additionneur 19D et les roues 5 du train rapproché 2D sont freinées de façon analogue aux roues 7 du train écarté 3D ;
   * l'ordre de freinage FG est adressé au dispositif de commande 6G à travers l'amplificateur 18G et l'additionneur 19G et les roues 5 du train rapproché 2G sont freinées de façon analogue aux roues 7 du train écarté 3G ;
   dans ce deuxième domaine, toutes les roues 5 et 7 du train rapproché droit 2D (ou gauche 2D) et du train écarté droit 3D (ou gauche 3G) sont freinées par l'ordre de freinage droit FD (ou gauche FG) et il n'existe aucune relation entre l'ordre de freinage droit FD et les roues 5 et 7 du train rapproché gauche 2G et du train écarté gauche 3G, ni entre l'ordre de freinage gauche FG et les roues 5 et 7 du train rapproché droit 2D et du train écarté droit 3D ; et
- un troisième domaine qui sert de transition continue entre lesdits premier et deuxième domaines et qui comporte une première zone dans laquelle la vitesse Vc est comprise entre Vc1 et Vc2 et la différence Δ est supérieure à Δ1 et une seconde zone dans laquelle la différence Δ est comprise entre Δ1 et Δ2 et la vitesse Vc est supérieure à Vc1 ; dans ce troisième domaine, le gain Kd passe progressivement de la valeur 0 à la valeur 1 (ou inversement de la valeur 1 à la valeur 0), alors qu'en conséquence le gain 1-Kd passe progressivement de la valeur 1 à la valeur 0 (ou inversement de la valeur 0 à la valeur 1), de sorte que les amplificateurs 18D et 18G deviennent progressivement actifs (ou inversement progressivement inactifs) alors que les amplificateurs 20D et 20G deviennent progressivement inactifs (ou inversement progressivement actifs), les additionneurs 19D et 19G assurant la continuité des commandes du freinage des roues 5 des trains rapprochés 2D et 2G.

## Revendications

1. Procédé pour la conduite et le freinage d'un aéronef (1) roulant sur le sol (S), ledit aéronef comportant :
- au moins deux paires de trains de roues (2D, 2G ; 3D, 3G), telles que les deux trains de roues de chaque paire sont symétriques l'un de l'autre par rapport au plan vertical longitudinal médian (V-V) d'un tel aéronef et que les deux trains de roues (2D, 2G), dits ci-après trains de roues rapprochés, de l'une desdites paires sont plus proches dudit plan vertical longitudinal médian (V-V) que les deux trains de roues (3D, 3G), dits ci-après trains de roues écartés, de l'autre desdites paires, chaque roue (5, 7) des trains de roues étant équipée d'un frein individuel ; et
- deux organes de commande de freinage (12D, 12G), à la disposition du pilote de l'aéronef, chacun desdits organes étant associé à deux trains de roues disposés d'un même côté dudit plan vertical longitudinal médian (V-V) et engendrant un ordre de freinage (FD, FG) apte à commander les freins des deux trains de roues associés,
**caractérisé en ce que :**
- on compare lesdits ordres de freinage (FD, FG) ;
- l'ordre de freinage le plus petit n'est appliqué que sur les freins du train de roues écarté auquel est associé l'organe de commande de freinage engendrant cet ordre de freinage le plus petit ; et
- l'ordre de freinage le plus grand est appliqué non seulement sur les freins des deux trains de roues auxquels est associé l'organe de commande de freinage engendrant cet ordre de freinage le plus grand, mais également sur les freins du train de roues rapproché associé à l'organe de commande de freinage engendrant ledit plus petit ordre de freinage.

2. Procédé selon la revendication 1,
**caractérisé en ce que :**
- on compare la vitesse de roulement de l'aéronef à un premier seuil (Vc2) ;
- on compare la valeur absolue de la différence desdits ordres de freinage à un deuxième seuil (Δ2) ;
- lorsque la vitesse de roulement de l'aéronef est inférieure audit premier seuil (Vc2), indépendamment de la position de ladite valeur absolue par rapport audit deuxième seuil, ou lorsque ladite valeur absolue est inférieure audit deuxième seuil, indépendamment de la position de ladite vitesse de roulement par rapport audit premier seuil, l'ordre de freinage le plus petit n'est appliqué que sur les freins du train de roues écarté auquel est associé l'organe de commande de freinage engendrant cet ordre de freinage le plus petit, alors que l'ordre de freinage le plus grand est appliqué non seulement sur les freins des deux trains de roues auquel est associé l'organe de commande de freinage engendrant cet ordre de freinage le plus grand, mais également sur les freins du train de roues rapproché associé à l'organe de commande de freinage engendrant le plus petit ordre de freinage ; et
- lorsque, simultanément, la vitesse de roulement de l'aéronef est supérieure audit premier seuil et ladite valeur absolue est supérieure audit deuxième seuil, chacun desdits ordres de freinage commande les freins des deux trains de roues associés à l'organe de commande de freinage correspondant.

3. Procédé selon la revendication 2,
**caractérisé en ce que**, lorsque la vitesse de roulement de l'aéronef ou ladite valeur absolue de la différence des ordres de freinage passent de part et d'autre du seuil correspondant, le changement de mode de freinage s'effectue progressivement.

4. Dispositif pour la conduite et le freinage d'un aéronef (1) roulant sur le sol (S), ledit aéronef comportant :
- au moins deux paires de trains de roues (2D, 2G ; 3D, 3G), telles que les deux trains de roues de chaque paire sont symétriques l'un de l'autre par rapport au plan vertical longitudinal médian (V-V) d'un tel aéronef et que les deux trains de roues (2D, 2G), dits ci-après trains de roues rapprochés, de l'une desdites paires sont plus proches dudit plan vertical longitudinal médian (V-V) que les deux trains de roues, dits ci-après trains de roues écartés, de l'autre desdites paires, chaque roue (5, 7) d'un train de roues étant équipée d'un frein individuel ; et
- deux organes de commande de freinage (12D, 12G), à la disposition du pilote de l'aéronef, chacun desdits organes étant associé à deux trains de roues disposés d'un même côté dudit plan vertical longitudinal médian (V-V) et engendrant un ordre de freinage (FD, FG) apte à commander les freins des deux trains de roues associés,
**caractérisé en ce qu'**il comporte des moyens de répartition de freinage (11) recevant les deux ordres de freinage (FD, FG) et pourvus de moyens (16) aptes à comparer ces derniers et **en ce que** lesdits moyens de répartition de freinage (11) :
- n'appliquent l'ordre de freinage le plus petit que sur les freins du train de roues écarté auquel est associé l'organe de commande de freinage engendrant cet ordre de freinage le plus petit ; et
- appliquent l'ordre de freinage le plus grand non seulement sur les freins des deux trains de roues auxquels est associé l'organe de commande de freinage engendrant cet ordre de freinage le plus grand, mais également sur les freins du train de roues rapproché associé à l'organe de commande de freinage engendrant ledit plus petit ordre de freinage.

5. Dispositif selon la revendication 4,
**caractérisé en ce que:**
- lesdits moyens de répartition de freinage (11) comportent des moyens de calcul (17) aptes à comparer la vitesse de roulement de l'aéronef à un premier seuil (Vc2) ;
- lesdits moyens de comparaison (16) adressent auxdits moyens de calcul (17) la différence entre lesdits ordres de freinage (FD, FG) et lesdits moyens de calcul (17) comparent la valeur absolue (Δ) de cette différence à un deuxième seuil (Δ2) ;
- lorsque la vitesse de roulement de l'aéronef est inférieure audit premier seuil (Vc2), indépendamment de la position de ladite valeur absolue par rapport audit deuxième seuil, ou lorsque ladite valeur absolue est inférieure audit deuxième seuil, indépendamment de la position de ladite vitesse de roulement par rapport audit premier seuil, lesdits moyens de répartition de freinage (11) n'appliquent l'ordre de freinage le plus petit que sur les freins du train de roues écarté auquel est associé l'organe de commande de freinage engendrant cet ordre de freinage le plus petit, alors que lesdits moyens de répartition de freinage (11) appliquent l'ordre de freinage le plus grand non seulement sur les freins des deux trains de roues auquel est associé l'organe de commande de freinage engendrant cet ordre de freinage le plus grand, mais également sur les freins du train de roues rapproché associé à l'organe de commande de freinage engendrant le plus petit ordre de freinage ; et
- lorsque, simultanément, la vitesse de roulement de l'aéronef est supérieure audit premier seuil (Vc2) et ladite valeur absolue est supérieure audit deuxième seuil (Δ2), lesdits moyens de répartition de freinage (11) appliquent chacun desdits ordres de freinage sur les freins des deux trains de roues associés à l'organe de commande de freinage correspondant.

6. Dispositif selon la revendication 5,
**caractérisé en ce que** lesdits moyens de répartition de freinage (11) comportent :
- deux liaisons directes (15D, 15G) reliant respectivement lesdits organes de commande de freinage (12D, 12G) aux freins (10) des roues (7) des trains écartés (3D, 3G);
- deux premiers éléments à conduction commandée (18D, 18G), aptes à relier respectivement lesdits organes de commande de freinage (12D, 12G) aux freins (9) des roues (5) des trains rapprochés (2D, 2G), les états passant et non passant desdits premiers éléments étant synchrones et commandés par lesdits moyens de calcul (17) ; et
- deux seconds éléments à conduction commandée (20D, 20G) aptes à relier respectivement une sortie (16.1) des moyens de comparaison (16) sur laquelle apparaît le plus grand desdits ordres de freinage aux freins (9) des roues (5) des trains rapprochés (2D, 2G), les états passant et non passant desdits seconds éléments étant synchrones, mais opposés à ceux desdits premiers éléments, et commandés par lesdits moyens de calcul (17).

7. Dispositif selon la revendication 6,
**caractérisé en ce que** le passage desdits premiers et seconds éléments à conduction commandée (18D, 18G ; 20D, 20G) d'un de leurs états à l'autre est progressif.

8. Dispositif selon l'une des revendications 6 ou 7,
**caractérisé en ce que** lesdits premiers et seconds éléments à conduction commandée (18D, 18G ; 20D, 20G) sont des amplificateurs à gain commandé variable.

9. Dispositif selon l'une des revendications 7 ou 8,
**caractérisé en ce que** des additionneurs (19D, 19G) sont respectivement interposés entre les premier et second éléments à conduction commandée et les freins (9) des roues (5) d'un même train rapproché (2D ou 2G).

10. Aéronef,
**caractérisé en ce qu**'il comporte un dispositif de conduite et de freinage tel que spécifié sous l'une quelconque des revendications 4 à 9.

## Claims

1. A method of controlling and braking an aircraft (1) running on the ground (S) and comprising:
- at least two pairs of undercarriage wheel assemblies (2D, 2G; 3D, 3G) such that the two undercarriage wheel assemblies of each pair are symmetrical with each other with respect to the median longitudinal vertical plane (V-V) of such an aircraft and that the two undercarriage wheel assemblies (2D, 2G), hereafter referred to as close undercarriage wheel assemblies, of one of the said pairs are closer to the said median longitudinal vertical plane (V-V) than the two undercarriage wheel assemblies (3D, 3G), hereafter referred to as distant undercarriage wheel assemblies, of the other one of the said pairs, each wheel (5, 7) of the undercarriage wheel assemblies being equipped with an individual brake; and
- two braking control devices (12D, 12G) available to the pilot of the aircraft, each of the said devices being associated with two undercarriage wheel assemblies disposed on a same side of the said median longitudinal vertical plane (V-V) and generating a braking command (FD, FG) capable of controlling the brakes of the two associated undercarriage wheel assemblies,
wherein:
- the said braking commands (FD, FG) are compared;
- the smallest braking command is applied only to the brakes of the distant undercarriage wheel assembly with which the braking control device generating this smallest command is associated; and
- the biggest braking command is applied not only to the brakes of the two undercarriage wheel assemblies with which the control device generating this biggest braking command is associated, but also to the brakes of the close undercarriage wheel assembly associated with the braking control device generating the said smallest braking command.

2. The method as claimed in claim 1, wherein:
- the running speed of the aircraft is compared with a first threshold (Vc2);
- the absolute value of the difference between the said braking commands is compared with a second threshold (Δ2);
- when the running speed of the aircraft is lower than the said first threshold (Vc2), irrespective of the position of the said absolute value with respect to the said second threshold, or when the said absolute value is lower than the said second threshold, irrespective of the position of the said running speed with respect to the said first threshold, the smallest braking commend is applied only to the brakes of the distant undercarriage wheel assembly with which the braking control device generating this smallest braking command is associated, whereas the biggest braking command is applied not only to the brakes of the two undercarriage wheel assemblies with which the braking control device generating this biggest braking command is associated, but also to the brakes of the close undercarriage wheel assembly associated with the braking control device generating the smallest braking command; and
- when, simultaneously, the running speed of the aircraft is higher than the said first threshold and the said absolute value is higher than the said second threshold, each of the said braking commands controls the brakes of the two undercarriage wheel assemblies associated with the corresponding braking control device.

3. The method as claimed in claim 2, wherein when the running speed of the aircraft or the said absolute value of the difference in braking commands pass on either side of the corresponding threshold, the change of braking mode takes place progressively.

4. A device for controlling and braking an aircraft (1) running on the ground (S), the said aircraft comprising:
- at least two pairs of undercarriage wheel assemblies (2D, 2G; 3D, 3G) such that the two undercarriage wheel assemblies of each pair are symmetrical with each other with respect to the median longitudinal vertical plane (V-V) of such an aircraft and that the two undercarriage wheel assemblies (2D, 2G), hereafter referred to as close undercarriage wheel assemblies, of one of the said pairs are closer to the said median longitudinal vertical plane (V-V) than the two undercarriage wheel assemblies, hereafter referred to as distant undercarriage wheel assemblies, of the other one of the said pairs, each wheel (5, 7) of an undercarriage wheel assembly being equipped with an individual brake; and
- two braking control devices (12D, 12G) available to the pilot of the aircraft, each of the said devices being associated with two undercarriage wheel assemblies disposed on a same side of the said median longitudinal vertical plane (V-V) and generating a braking command (FD, FG) capable of controlling the brakes of the two associated undercarriage wheel assemblies,
wherein: it comprises braking distribution means (11) receiving the two braking commands (FD, FG) and provided with means (16) capable of comparing the latter and wherein the said braking distribution means (11) :
- apply the smallest braking command only to the brakes of the distant undercarriage wheel assembly with which the braking control device generating this smallest braking command is associated, and
- applying the biggest braking command not only to the brakes of the two undercarriage wheel assemblies with which the braking control device generating this biggest braking command is associated, but also to the brakes of the close undercarriage wheel assembly associated with the braking control device generating the said smallest braking command.

5. The device as claimed in claim 4, wherein:
- the said braking distribution means (11) comprise calculation means (17) capable of comparing the running speed of the aircraft with a first threshold (Vc2) ;
- the said comparison means (16) address the said means (17) for calculating the difference between the said braking commands (FD, FG) and the said calculating means (17) compare the absolute value (Δ) of this difference with a second threshold (Δ2);
- when the running speed of the aircraft is lower than the said first threshold (Vc2), irrespective of the position of the said absolute value with respect to the said second threshold, or when the said absolute value is lower than the said second threshold, irrespective of the position of the said running speed with respect to the said first threshold, the said braking distribution means (11) apply the smallest braking command only to the brakes of the distant undercarriage wheel assembly with which the braking control device generating this smallest braking command is associated, whereas the said braking distribution means (11) apply the biggest braking command not only to the brakes of the two undercarriage wheel assemblies with which the braking control device generating that biggest braking command is associated, but also to the brakes of the close undercarriage wheel assembly associated with the braking control device generating the smallest braking command; and
- when, simultaneously, the running speed of the aircraft is higher than the said first threshold (Vc2) and the said absolute value is higher than the said second threshold (Δ2), the said braking distribution means (11) apply each of the said braking commands to the brakes of both undercarriage wheel assemblies associated with the corresponding braking control device.

6. The device as claimed in claim 5, wherein the said braking distribution means (11) comprise:
- two direct connections (15D, 15G) respectively connecting the said braking control devices (12D, 12G) to the wheel (7) brakes (10) of the distant undercarriage units (3D, 3G);
- two first controlled conduction elements (18D, 18G), capable of respectively connecting the said braking control devices (12D, 12G) to the wheel (5) brakes (9) of the close undercarriage units (2D, 2G), the passing and non-passing states of the said first elements being synchronous and controlled by the said calculating means (17); and
- two second controlled conduction means (20D, 20G) capable of respectively connecting an output (16.1) of the comparison means (16) on which the biggest of the said braking commands appears to the wheel (5) brakes (9) of the close undercarriage units (2D, 2G), the passing and non-passing states of the said second elements being synchronous, but opposite to those of the said first elements, and controlled by the said calculation means (17).

7. The device as claimed in claim 6, wherein the changing of the said first and second controlled conduction elements (18D, 18G; 20D, 20G) from one of their states to the other is progressive.

8. The device as claimed in one of claims 6 or 7, wherein the said first and second controlled conduction elements (18D, 18G; 20D, 20G) are variable controlled gain amplifiers.

9. The device as claimed in one of claims 7 or 8, wherein adders (19D, 19G) are disposed respectively between the first and second controlled conduction elements and the wheel (5) brakes (9) of a same close undercarriage unit (2D or 2G).

10. An aircraft, wherein it comprises a controlling and braking control device such as claimed in anyone of claims 4 to 9.

## Patentansprüche

1. Verfahren zur Lenkung und Bremsung eines auf dem Boden (S) rollenden Flugzeuges (1), das Folgendes aufweist:
- mindestens zwei Paar Radsätze (2D, 2G; 3D, 3G), die so beschaffen sind, dass die zwei Radsätze jedes Paars in Bezug auf die vertikale Längsmittelebene (V-V) eines solchen Flugzeuges zueinander symmetrisch sind, und dass sich die zwei Radsätze (2D, 2G), nachstehend als nahe Radsätze bezeichnet, des einen der Paare näher an der vertikalen Längsmittelebene (V-V) befinden als die zwei Radsätze (3D, 3G), nachstehend als ferne Radsätze bezeichnet, des anderen der Paare, wobei jedes Rad (5, 7) der Radsätze mit einer individuellen Bremse ausgestattet ist; und
- zwei Steuerorgane für die Bremsung (12D, 12G), die dem Piloten des Flugzeuges zur Verfügung stehen, wobei jedes der Steuerorgane mit zwei Radsätzen verknüpft ist, die auf einer selben Seite der vertikalen Längsmittelebene (V-V) angeordnet sind, und einen Bremsbefehl (FD, FG) erzeugt, der fähig ist, die Bremsen der zwei verknüpften Radsätze zu steuern,
**dadurch gekennzeichnet, dass**:
- die Bremsbefehle (FD, FG) verglichen werden;
- der Befehl für die schwächste Bremsung nur an den Bremsen des fernen Radsatzes angewendet wird, mit dem das Steuerorgan für die Bremsung verknüpft ist, das diesen Befehl für die schwächste Bremsung erzeugt; und
- der Befehl für die stärkste Bremsung nicht nur an den Bremsen der zwei Radsätze angewendet wird, mit denen das Steuerorgan für die Bremsung verknüpft ist, das diesen Befehl für die stärkste Bremsung erzeugt, sondern auch an den Bremsen des nahen Radsatzes, der mit dem Steuerorgan für die Bremsung verknüpft ist, das den Befehl für die schwächste Bremsung erzeugt.

2. Verfahren nach Anspruch 1,
**dadurch gekennzeichnet, dass**:
- die Rollgeschwindigkeit des Flugzeuges mit einem ersten Schwellenwert (Vc2) verglichen wird;
- der Absolutwert der Differenz der Bremsbefehle mit einem zweiten Schwellenwert (Δ2) verglichen wird;
- wenn die Rollgeschwindigkeit des Flugzeuges kleiner ist als der erste Schwellenwert (Vc2), unabhängig von der Position des Absolutwerts im Verhältnis zum zweiten Schwellenwert, oder wenn der Absolutwert kleiner ist als der zweite Schwellenwert, unabhängig von der Position der Rollgeschwindigkeit im Verhältnis zum ersten Schwellenwert, der Befehl für die schwächste Bremsung nur an den Bremsen des fernen Radsatzes angewendet wird, mit dem das Steuerorgan für die Bremsung verknüpft ist, das diesen Befehl für die schwächste Bremsung erzeugt, während der Befehl für die stärkste Bremsung nicht nur an den Bremsen der zwei Radsätze angewendet wird, mit denen das Steuerorgan für die Bremsung verknüpft ist, das diesen Befehl für die stärkste Bremsung erzeugt, sondern auch an den Bremsen des nahen Radsatzes, der mit dem Steuerorgan für die Bremsung verknüpft ist, das den Befehl für die schwächste Bremsung erzeugt; und
- wenn gleichzeitig die Rollgeschwindigkeit des Flugzeuges größer ist als der erste Schwellenwert und der Absolutwert größer ist als der zweite Schwellenwert, jeder der Bremsbefehle die Bremsen der zwei Radsätze steuert, die mit dem entsprechenden Steuerorgan für die Bremsung verknüpft sind.

3. Verfahren nach Anspruch 2,
**dadurch gekennzeichnet, dass**, wenn die Rollgeschwindigkeit des Flugzeuges oder der Absolutwert der Differenz der Bremsbefehle auf beiden Seiten des entsprechenden Schwellenwertes verläuft, der Wechsel der Bremsmodi progressiv erfolgt.

4. Vorrichtung zur Lenkung und Bremsung eines Flugzeuges (1), das auf dem Boden (S) rollt und Folgendes aufweist:
- mindestens zwei Paar Radsätze (2D, 2G; 3D, 3G), die so beschaffen sind, dass die zwei Radsätze jedes Paares in Bezug auf die vertikale Längsmittelebene (V-V) eines solchen Flugzeuges zueinander symmetrisch sind, und dass sich die zwei Radsätze (2D, 2G), nachstehend als nahe Radsätze bezeichnet, des einen der Paare näher an der vertikalen Längsmittelebene (V-V) befinden als die zwei Radsätze, nachstehend als ferne Radsätze bezeichnet, des anderen der Paare, wobei jedes Rad (5, 7) eines Radsatzes mit einer individuellen Bremse ausgestattet ist; und
- zwei Steuerorgane für die Bremsung (12D, 12G), die dem Piloten des Flugzeuges zur Verfügung stehen, wobei jedes der Steuerorgane mit zwei Radsätzen verknüpft ist, die auf einer selben Seite der vertikalen Längsmittelebene (V-V) angeordnet sind, und einen Bremsbefehl (FD, FG) erzeugt, der fähig ist, die Bremsen der zwei verknüpften Radsätze zu steuern,
**dadurch gekennzeichnet, dass** sie Bremsverteilungsmittel (11) aufweist, welche die zwei Bremsbefehle (FD, FG) empfangen, und mit Mitteln (16) ausgestattet sind, die geeignet sind, die Bremsbefehle (FD, FG) zu vergleichen, und dass die Bremsverteilungsmittel (11):
- den Befehl für die schwächste Bremsung nur an den Bremsen des fernen Radsatzes anwenden, mit dem das Steuerorgan für die Bremsung verknüpft ist, das diesen Befehl für die schwächste Bremsung erzeugt; und
- den Befehl für die stärkste Bremsung nicht nur an den Bremsen der zwei Radsätze anwenden, mit denen das Steuerorgan für die Bremsung verknüpft ist, das diesen Befehl für die stärkste Bremsung erzeugt, sondern auch an den Bremsen des nahen Radsatzes, der mit dem Steuerorgan für die Bremsung verknüpft ist, das den Befehl für die schwächste Bremsung erzeugt.

5. Vorrichtung nach Anspruch 4,
**dadurch gekennzeichnet, dass**:
- die Bremsverteilungsmittel (11) Rechenmittel (17) aufweisen, die geeignet sind, die Rollgeschwindigkeit des Flugzeuges mit einem ersten Schwellenwert (Vc2) zu vergleichen;
- die Vergleichsmittel (16) die Differenz zwischen den Bremsbefehlen (FD, FG) an die Rechenmittel (17) leiten, und die Rechenmittel (17) den Absolutwert (Δ) dieser Differenz mit einem zweiten-Schwellenwert (Δ2) vergleichen;
- wenn die Rollgeschwindigkeit des Flugzeuges kleiner ist als der erste Schwellenwert (Vc2), unabhängig von der Position des Absolutwerts im Verhältnis zu dem zweiten Schwellenwert, oder wenn der Absolutwert kleiner ist als der zweite Schwellenwert, unabhängig von der Position der Rollgeschwindigkeit im Verhältnis zu dem ersten Schwellenwert, die Bremsverteilungsmittel (11) den Befehl für die schwächste Bremsung nur an den Bremsen des fernen Radsatzes anwenden, mit dem das Steuerorgan für die Bremsung verknüpft ist, das diesen Befehl für die schwächste Bremsung erzeugt, während die Bremsverteilungsmittel (11) den Befehl für die stärkste Bremsung nicht nur an den Bremsen der zwei Radsätze anwenden, mit denen das Steuerorgan für die Bremsung verknüpft ist, das diesen Befehl für die stärkste Bremsung erzeugt, sondern auch an den Bremsen des nahen Radsatzes, der mit dem Steuerorgan für die Bremsung verknüpft ist, das den Befehl für die schwächste Bremsung erzeugt; und
- wenn gleichzeitig die Rollgeschwindigkeit des Flugzeuges größer ist als der erste Schwellenwert (Vc2) und der Absolutwert größer ist als der zweite Schwellenwert (Δ2), die Bremsverteilungsmittel (11) jeden der Bremsbefehle an den Bremsen der zwei Radsätze anwenden, die mit dem entsprechenden Steuerorgan für die Bremsung verknüpft sind.

6. Vorrichtung nach Anspruch 5,
**dadurch gekennzeichnet, dass** die Bremsverteilungsmittel (11) Folgendes aufweisen:
- zwei direkte Verbindungen (15D, 15G), die jeweils die Steuerorgane für die Bremsung (12D, 12G) mit den Bremsen (10) der Räder (7) der fernen Radsätze (3D, 3G) verbinden;
- zwei erste Elemente mit gesteuerter Leitung (18D, 18G), die geeignet sind, jeweils die Steuerorgane für die Bremsung (12D, 12G) mit den Bremsen (9) der Räder (5) der nahen Radsätze (2D, 2G) zu verbinden, wobei die leitenden und nicht leitenden Zustände der ersten Elemente synchron sind und von den Rechenmitteln (17) gesteuert werden; und
- zwei zweite Elemente mit gesteuerter Leitung (20D, 20G), die geeignet sind, jeweils einen Ausgang (16.1) der Vergleichsmittel (16), an dem der Befehl für die stärkste Bremsung erscheint, mit den Bremsen (9) der Räder (5) der nahen Radsätze (2D, 2G) zu verknüpfen, wobei die leitenden und nicht leitenden Zustände der zweiten Elemente synchron, aber jenen der ersten Elemente entgegengerichtet sind und von den Rechenmitteln (17) gesteuert werden.

7. Vorrichtung nach Anspruch 6,
**dadurch gekennzeichnet, dass** der Übergang der ersten und zweiten Elemente mit gesteuerter Leitung (18D, 18G; 20D, 20G) von einem ihrer Zustände in den anderen progressiv erfolgt.

8. Vorrichtung nach einem der Ansprüche 6 oder 7,
**dadurch gekennzeichnet, dass** die ersten und zweiten Elemente mit gesteuerter Leitung (18D, 18G; 20D, 20G) Verstärker mit gesteuerter variabler Verstärkung sind.

9. Vorrichtung nach einem der Ansprüche 7 oder 8,
**dadurch gekennzeichnet, dass** die Addierer (19D, 19G) jeweils zwischen dem ersten und zweiten Element mit gesteuerter Leitung und den Bremsen (9) der Räder (5) eines selben nahen Radsatzes (2D oder 2G) eingesetzt sind.

10. Flugzeug,
**dadurch gekennzeichnet, dass** es eine Vorrichtung zur Lenkung und Bremsung aufweist, wie sie in einem der Ansprüche 4 bis 9 spezifiziert wird.
